Europäisches Patentamt

European Patent Office

Office européen des brevets

(19)

(11) Numéro de publication: **0 281 487**
**B1**

(12) **FASCICULE DE BREVET EUROPEEN**

(45) Date de publication du fascicule du brevet:
**12.12.90**

(21) Numéro de dépôt: **88420040.3**

(22) Date de dépôt: **11.02.88**

(51) Int. Cl.⁵: **F27B 9/02, F27B 9/24,
B65G 35/06, F27B 9/14**

(54) **Four de cuisson de produits à base d'argile ou similaire.**

(30) Priorité: **11.02.87 FR 8702034**

(43) Date de publication de la demande:
**07.09.88 Bulletin 88/36**

(45) Mention de la délivrance du brevet:
**12.12.90 Bulletin 90/50**

(84) Etats contractants désignés:
**BE CH DE ES GB IT LI NL**

(56) Documents cités:
**EP-A- 0 023 316
EP-A- 0 126 689
DE-A- 3 445 792
FR-A- 768 209
GB-A- 595 380**

(73) Titulaire: **L'INDUSTRIELLE REGIONALE DU BATIMENT,
17, avenue de la Falaise, F-38360 Sassenage(FR)**

(72) Inventeur: **Ferragut, Jean-Pierre, 90, avenue Jean
Jaurès, F-26240 Saint Vallier(FR)**

(74) Mandataire: **Maureau, Philippe et al, Cabinet Germain &
Maureau Le Britannia - Tour C 20, bld Eugène Déruelle
Boîte Postale 3011, F-69392 Lyon Cédex 03(FR)**

## Description

La présente invention a pour objet un four de cuisson de produits à base d'argile ou similaire.

La réalisation de produits à base d'argile nécessite une consommation importante d'énergie, lors des différentes phases du processus de fabrication, qui comprend la fabrication proprement dite, le séchage, et la cuisson.

Une technique pour réaliser la cuisson des produits consiste à utiliser un four à rouleaux. Un tel four comprend un tunnel d'environ 90m de long et de 1,20m de large, contenant une nappe horizontale de rouleaux parallèles les uns aux autres. Ces rouleaux traversant les parois latérales du four sont équipés de moyens d'entraînement en rotation à même vitesse et dans le même sens, et assurent un déplacement des produits à cuire à l'intérieur du four, les produits étant introduits à une extrémité du four et ressortant à l'autre extrémité de celui-ci. Un tel four comprend trois zones décalées axialement, à savoir, d'amont en aval, une zone de préchauffage, une zone de cuisson proprement dite à température constante, et une zone de refroidissement. Seule la zone de cuisson est équipée de moyens de chauffage, par exemple à l'aide de brûleurs à flamme directe. Le refroidissement des produits est réalisé par circulation d'air à contre-courant du sens de déplacement des produits, cet air et les gaz de combustion réchauffant progressivement les produits qui entrent dans le tunnel et réalisant ainsi leur préchauffage. L'air et les gaz de combustion sont ensuite rejetés dans l'atmosphère, à l'extrémité amont du tunnel.

Si un tel four donne satisfaction, en ce qui concerne la cuisson des produits, il présente l'inconvénient de nécessiter une consommation importante d'énergie, l'air nécessaire pour assurer les échanges étant rejeté dans l'atmosphère à une température de l'ordre de 250°C.

En outre, pour fair circuler cet air, et vaincre les pertes de charge dans le tunnel, il faut fournir une force motrice importante créant des écarts de pression élevés entre l'intérieur et l'extérieur, se traduisant par des fuites qui engendrent des déperditions calorifiques. Enfin, la longueur importante du tunnel nécessite la construction d'un bâtiment de grandes dimensions qui participe également à l'augmentation du coût de l'investissement.

La présente invention vise à remédier à ces inconvénients en fournissant un four de cuisson de produits à base d'argile ou similaire, de structure beaucoup plus compacte que les fours à rouleaux traditionnels, et consommant beaucoup moins d'énergie que ceux-ci.

A cet effet, le four qu'elle concerne comprend un tunnel dont une extrémité est fermée, contenant deux séries horizontales et superposées de rouleaux transversaux au tunnel, les rouleaux de la série supérieure étant entraînés en rotation pour déplacer les produits de l'extrémité ouverte du tunnel vers l'extrémité fermée de celui-ci, et les rouleaux de la série inférieure étant entraînés en rotation pour déplacer les produits de l'extrémité fermée du tunnel vers l'extrémité ouverte de celui-ci, ce tunnel étant en outre équipé
- à son extrémité fermée d'un descenseur permettant de faire passer les produits de la série supérieure à la série inférieure de rouleaux,
- du côté de son extrémité fermée, d'un dispositif de chauffage à température constant et
- du côté de son extrémité ouverte, d'un dispositif d'extraction des gaz de combustion.

En pratique les produits à cuire sont introduits dans le tunnel sur la série supérieure de rouleaux, et cheminent sur les rouleaux vers le fond du canal, à proximité duquel est située la zone de cuisson proprement dite. A ce niveau, ils sont pris en charge par le descenseur qui les dépose sur la série inférieure de rouleaux déplaçant les produits vers l'extrémité ouverte du tunnel.

Au cours de ce déplacement des produits de l'extrémité fermée vers l'extrémité ouverte du tunnel, ceux-ci assurent un réchauffage progressif des produits entrant dans le tunnel et portés par la série supérieure de rouleaux, ce réchauffage étant obtenu par rayonnement et par convection.

Un tel four est très intéressant pour plusieurs raisons :
- le four étant sensiblement deux fois moins long qu'un four traditionnel, est d'un prix de revient moins élevé,
- le four étant plus court, le bâtiment dans lequel il est installé est également de plus faibles dimensions qu'habituellement,
- le préchauffage des produits froids est réalisé de façon économique à partir des produits chauds qui sont pour leur part en phase de refroidissement,
- seuls les gaz de combustion étant éliminés, il n'est pas besoin d'amener de l'air en excès pour effectuer les échanges thermiques comme dans le cas des fours traditionnels, ce qui se traduit par une limitation des pertes d'énergie.

Avantageusement, le descenseur est constitué par deux cadres métalliques verticaux et parallèles, reliés à leur extrémité inférieure et disposés de part et d'autre du tunnel, portant une série horizontale de rouleaux parallèles et décalés axialement les uns par rapport aux autres, les cadres supports étant associés à des moyens de déplacement vertical par vérins, susceptibles de faire passer les rouleaux d'un plan correspondant à la série supérieure de rouleaux à un plan correspondant à la série inférieure de rouleaux, des lumières verticales étant prévues dans les parois du tunnel, pour permettre le déplacement vertical des rouleaux des plaques solidaires des cadres obturant les lumières verticales dans leurs zones non traversées par les rouleaux.

Les rouleaux mobiles se trouvant en position haute reçoivent un ou plusieurs produits arrivant au fond du tunnel. Ces rouleaux sont alors déplacés vers le bas pour amener le ou les produits au niveau de la série inférieure de rouleaux. Les produits sont alors dirigés vers l'extrémité ouverte du tunnel par la série inférieure de rouleaux. Il est à noter qu'au cours du mouvement du descenseur les fuites d'air chaud vers l'extérieur sont limitées par des plaques recouvrant la zone des lumières verticales non occupées par le passage des axes.

Selon une première forme d'exécution de ce four, les rouleaux appartenant au descenseur sont associés à des moyens permettant leur entraînement en rotation dans le même sens que les rouleaux de la série supérieure de rouleaux, quand ils sont dans le même plan que les rouleaux de cette série, et leur entraînement dans le même sens que les rouleaux de la série inférieure de rouleaux, quand ils sont dans le même plan que les rouleaux de cette seconde série, et sont à l'arrêt lors de la période de transfert.

Les rouleaux appartenant au descenseur peuvent être reliés les uns aux autres par une chaîne, cette chaîne venant engrener respectivement en position haute et en position basse du descenseur avec deux pignons assurant son entraînement dans le sens souhaité.

Selon une autre forme d'exécution de ce four, la série inférieure de rouleaux est équipée, au niveau du descenseur de rouleaux entraînés dans le même sens que les rouleaux de cette série, et les rouleaux du descenseur sont décalés axialement par rapport aux rouleaux de la série inférieure de manière à pouvoir, en position basse, s'imbriquer entre ces derniers, les rouleaux du descenseur étant entraînés dans le seul sens des rouleaux de la série supérieure de rouleaux lorsqu'ils sont dans le même plan que ceux-ci. Si cette solution augmente légèrement le nombre de rouleaux nécessaires, elle présente l'avantage d'assurer une plus grande rapidité dans le cycle du descenseur.

Le transfert des produits par le descenseur étant effectué pendant l'amenée et l'évacuation en continu des produits, il est important de ménager un espace suffisant entre deux lots de produits, en fond de four, afin de permettre au descenseur de disposer d'un temps suffisant pour effectuer un cycle. A cet effet, les rouleaux de la série supérieure de rouleaux disposés en amont du descenseur sont équipés de moyens d'entraînement à vitesse variable, entre une vitesse égale à celle des autres rouleaux, pendant le cycle de mouvement du descenseur et une vitesse plus importante lors de l'amené des produits sur les rouleaux du descenseur.

De toute façon, l'invention sera bien comprise à l'aide de la description qui suit, en référence au dessin schématique annexé, représentant à titre d'exemple non limitatif, une forme d'exécution de ce four de cuisson :

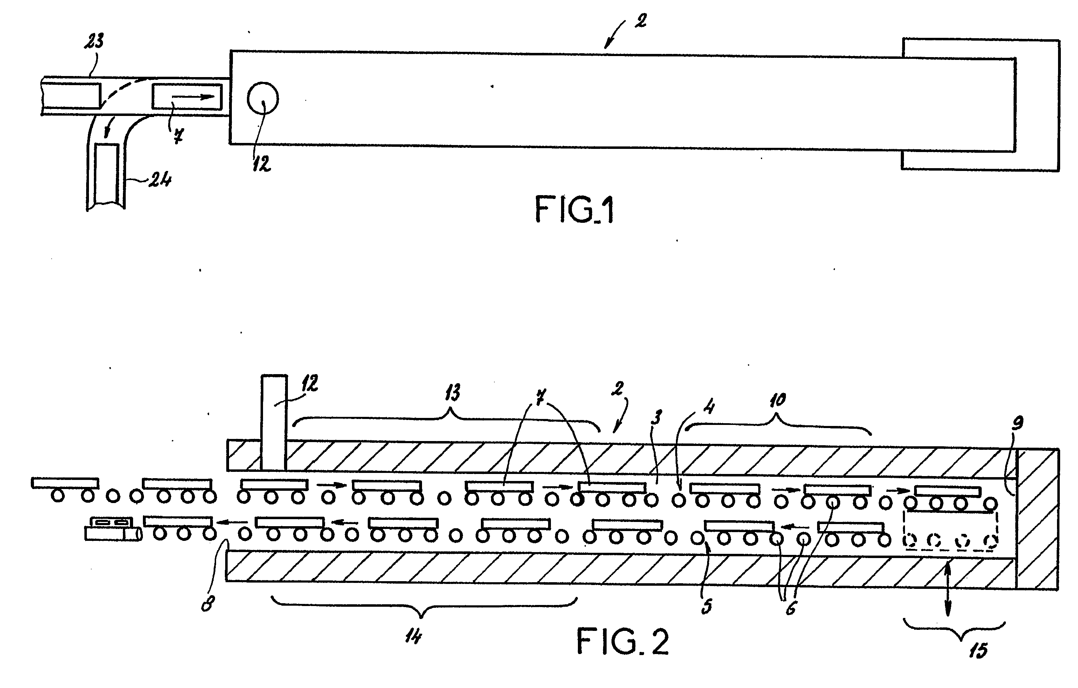

Figure 1 en est une vue dessus ;
Figure 2 en est une vue en coupe longitudinale par un plan vertical ;
Figure 3 est une vue en coupe longitudinale par un plan vertical, et à échelle agrandie, de l'extrémité fermée du tunnel ;
Figure 4 est une vue en coupe transversale du tunnel selon la ligne IV-IV de figure 3.

Le four désigné par la référence générale 2 comprend un tunnel 3 de forme allongée contenant deux séries 4,5 de rouleaux 6, les deux séries 4 et 5 étant horizontales et superposées, la série supérieure 4 de rouleaux 6 étant située au-dessus de la série inférieure 5 de rouleaux 6. Les rouleaux de la série supérieure 4 sont entraînés en rotation pour déplacer les produits 7 de l'extrémité ouverte 8 du tunnel vers l'extrémité fermée 9 de celui-ci, et les rouleaux 6 de la série inférieure 5 sont entraînés en rotation pour entraîner les produits 7 de l'extrémité fermée 9 du tunnel vers l'extrémité ouverte de celui-ci.

Ce four comprend du côté de son extrémité fermée 9 une zone de cuisson 10, le chauffage étant réalisé par l'intermédiaire de brûleurs à gaz par exemple, l'évacuation des gaz de combustion étant effectuée par une cheminée d'extraction 12, située du côté de l'extrémité ouverte 8 du tunnel. Les zones de préchauffage 13 et de refroidissement 14 sont situées du côté de l'extrémité ouverte du tunnel, et correspondent respectivement aux rouleaux de la série supérieure et aux rouleaux de la série inférieure.

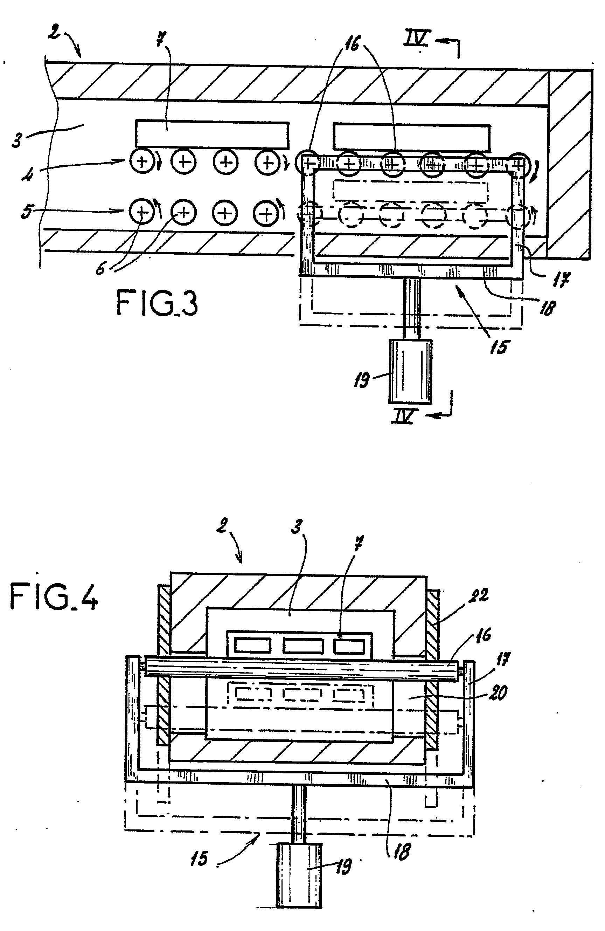

Le transfert des produits 7 au niveau de l'extrémité fermée 9 du tunnel des rouleaux de la série supérieure 4 au rouleaux de la série inférieure 5 est réalisé par l'intermédiaire d'un descenseur 15. Ce descenseur 15 représenté plus en détail aux figures 3 et 4 comprend plusieurs rouleaux 16 parallèles et décalés axialement les uns par rapport aux autres, montés pivotant sur deux cadres verticaux, 17, reliés à leurs extrémités inférieures 18, et susceptibles d'être déplacés verticalement par un vérin 19. Pour permettre ce mouvement de déplacement vertical des rouleaux entre deux positions correspondant respectivement au plan de la série supérieure 4 et au plan de la série inférieure 5, des lumières verticales 20 sont prévues pour le passage des rouleaux 16, ces lumières 20 étant obturées par des plaques 22 solidaires des cadres 17, pour éviter les déperditions calorifiques.

Dans la forme d'exécution représentée au dessin, les rouleaux 16 sont associés à des moyens assurant leur entraînement en rotation dans le même sens que les rouleaux de la série supérieure 4, lorsque le descenseur est en position haute et dans le même sens que les rouleaux de la série inférieure 5 lorsque le descenseur est en position basse.

Il est à noter que les rouleaux situés immédiatement en amont du descenseur sont associés à des moyens d'entraînement à vitesse variable, permettant d'augmenter l'espace entre les produits pour fournir au descenseur un temps de cycle suffisant.

En pratique, et comme montré au dessin les produits sont amenés par un transporteur 23 sur les rouleaux de la série supérieure 4, et subissent dans la zone 13 un préchauffage, ce préchauffage étant obtenu par rayonnement des produits se trouvant sur la série inférieure 5 qui sont en phase de refroidissement, ainsi que par convection d'air chaud. Les produits préchauffés arrivent dans la zone de cuisson 10, sont ensuite pris en charge par le descenseur 15 qui les amène sur la série inférieure 5 de rouleaux, qui les déplace elle-même, vers la sortie 24.

Comme il ressort de ce qui précède, l'invention apporte une grande amélioration à la technique existante, en fournissant un four pour la cuisson des produits en argile ou similaire, de structure simple et compacte, d'un prix de revient, et d'un coût d'exploitations économiques.

## Revendications

1. Four de cuisson de produits à base d'argile ou similaire comprenant un tunnel (2) dont une extrémité est fermée (9), contenant deux séries (4,5) horizontales et superposées de rouleaux (6) traversaux au tunnel, les rouleaux de la série supérieure (4) étant entraîné en rotation pour déplacer les produits de l'extrémité ouverte (8) du tunnel vers l'extrémité fermée (9) de celui-ci, et les rouleaux de la série inférieure (5) étant entraînés en rotation pour déplacer les produits de l'extrémité fermée du tunnel vers l'extrémité ouverte de celui-ci, ce tunnel étant en outre équipé

- à son extrémité fermée d'un descenseur (15) permettant de faire passer les produits de la série supérieure (4) sur la série inférieure (5) de rouleaux (6),
- du côté de son extrémité fermée (9), d'un dispositif de chauffage à température constante et
- du côté de son extrémité ouverte, d'un dispositif (12) d'extraction des gaz de combustion.

2. Four selon la revendication 1, caractérisé en ce que le descenseur (15) est constitué par deux cadres métalliques (17) verticaux et parallèles, reliés à leur extrémité inférieure et disposés de part et d'autre du tunnel, portant une série horizontale de rouleaux (16) parallèles et décalés axialement les uns par rapport aux autres, les cadres supports étant associés à des moyens (19) de déplacement vertical par vérins, susceptibles de faire passer les rouleaux d'un plan correspondant à la série supérieure (4) de rouleaux à un plan correspondant à la série inférieure (5) de rouleaux, des lumières veticales (20) étant prévues dans les parois du tunnel, pour permettre le déplacement vertical des rouleaux, des plaques solidaires (22) des cadres obturant les lumières verticales dans leurs zones non traversées par les rouleaux.

3. Four selon la revendication 2, caractérisé en ce que les rouleaux (16) appartenant au descenseur (15) sont associés à des moyens permettant leur entraînement en rotation dans le même sens que les rouleaux (6) de la série supérieure (4) de rouleaux, quand ils sont dans le même plan que les rouleaux de cette série, et leur entraînement dans le même sens que les rouleaux (6) de la série inférieure (5) de rouleaux, quand ils sont dans le même plan que les rouleaux de cette seconde série, et son à l'arrêt lors de la période de transfert.

4. Four selon la revendication 2, caractérisé en ce que la série inférieure (5) de rouleaux est équipée, au niveau du descenseur (15) de rouleaux entraînés dans le même sens que les rouleaux de cette série, et les rouleaux du descenseur sont décalés axialement par rapport aux rouleaux de la série inférieure de manière à pouvoir, en position basse, s'imbriquer entre ces derniers, les rouleaux du descenseur étant entraînés dans le seul sens des rouleaux de la série supérieure de rouleaux lorsqu'ils sont dans le même plan que ceux-ci.

5. Four selon l'une quelconque des revendications 1 à 4, caractérisé en ce que les rouleaux (6) de la série supérieure (4) de rouleaux disposés en amont du descenseur (15) sont équipés de moyens d'entraînement à vitesse variable, entre une vitesse égale à celle des autres rouleaux, pendant le cycle de mouvement du descenseur et une vitesse plus importante lors de l'amené des produits sur les rouleaux du descenseur.

## Patentansprüche

1. Brennofen für tonhaltige oder gleichartige Produkte, mit einem Tunnel (2), dessen eines Ende geschlossen ist (9), versehen mit zwei horizontalen und übereinanderliegenden Reihen (4, 5) sich quer zum Tunnel erstreckender Rollen (6), wobei die Rollen der oberen Reihe (4) rotationsangetrieben sind, um die Produkte vom offenen Ende (8) des Tunnels in Richtung zum geschlossenen Ende (9) desselben zu verlagern, und wobei die Rollen der unteren Reihe (5) rotationsangetrieben sind, um die Produkte vom geschlossenen Ende des Tunnels in Richtung zum offenen Ende desselben zu verlagern, wobei dieser Tunnel außerdem

– bei seinem geschlossenen Ende mit einem Abwärtsförderer (15), der es erlaubt, die Produkte der oberen Reihe (4) auf die untere Reihe (5) von Rollen (6) zu verbringen
– auf der Seite seines geschlossenen Endes (9) mit einer Konstanttemperatur-Heizvorrichtung und
– auf der Seite seines offenen Endes mit einer Abgas-Abführungsvorrichtung (12) ausgestattet ist.

2. Ofen gemäß Anspruch 1, dadurch gekennzeichnet, daß der Abwärtsförderer (15) aus zwei vertikalen und parallelen, an ihrem unteren Ende miteinander verbundenen und beidseits des Tunnels angeordneten metallischen Gestellen bzw. Rahmen (17) besteht, die eine horizontale Reihe paralleler und einander gegenüber axial versetzter Rollen (16) tragen, wobei die Tragrahmen mit Mitteln (19) zur vertikalen Bewegung mittels Zylindern verbunden sind, fähig, um die Rollen von einer der oberen Rollenreihe (4) entsprechenden Ebene auf eine der unteren Rollenreihe (5) entsprechende Ebene zu verbringen, wobei vertikale Öffnungen (20) in den Wänden des Tunnels vorgesehen sind, um die vertikale Verlagerung der Rollen zu erlauben, und wobei mit den Rahmen verbundene Platten (22) die vertikalen Öffnungen in ihren von den Rollen nicht durchdrungenen Bereichen verschließen.

3. Ofen gemäß Anspruch 2, dadurch gekennzeichnet, daß die zum Abwärtsförderer (15) gehörenden Rollen (16) mit Mitteln verbunden sind, die ihren Antrieb zur Rotation gleichsinnig wie die Rollen (6) der oberen Rollenreihe (4) erlauben, wenn sie sich in der gleichen Ebene wie die Rollen dieser Reihe befinden, und ihren Antrieb gleichsinnig wie die Rollen (6) der unteren Rollenreihe (5) erlauben, wenn sie sich in der gleichen Ebene wie die Rollen dieser zweiten Reihe befinden, und daß die zum Abwärtsförderer (15) gehörender Rollen (16) während der Transferperiode im Stillstand sind.

4. Ofen gemäß Anspruch 2, dadurch gekennzeichnet, daß die untere Rollenreihe (5) auf dem Niveau bzw. im Bereich des Abwärtsförderers (15) mit im gleichen Sinne wie die Rollen dieser Reihe angetriebenen Rollen ausgestattet ist, und daß die Rollen des Abwärtsförderers axial mit Bezug zu den Rollen der unteren Reihe versetzt sind, um sich in abgesenkter Position zwischen diese letzteren zwischenfügen zu können, wobei die Rollen des Abwärtsförderers im alleinigen Sinne der Rollen der oberen Rollenreihe angetrieben sind, wenn sie sich in derselben Ebene wie diese befinden.

5. Ofen gemäß irgendeinem der Ansprüche 1 bis 4, dadurch gekennzeichnet, daß die stromauf bzw. oberhalb des Abwärtsförderers angeordneten Rollen (6) der oberen Rollenreihe (4) mit Mitteln zum Antrieb in variabler Geschwindigkeit ausgestattet sind, zwischen einer mit derjenigen der anderen Rollen übereinstimmenden Geschwindigkeit während des Bewegungszyklus' des Abwärtsförderer und einer größeren Geschwindigkeit während der Zufuhr von Produkten auf die Rollen des Abwärtsförderers.

**Claims**

1. A kiln for products based on clay or similar material, comprising a tunnel (2) one end (9) of which is closed, containing two series (4, 5) of horizontal and superimposed rollers (6) transverse to the tunnel, the rollers of the upper series (4) being made to rotate in order to move the products from the open end (8) of the tunnel towards its closed end (9), and the rollers of the lower series (5) being made to rotate to move the products from the closed end of the tunnel towards its open end, this tunnel also being equipped with:
   – at its closed end, a lowering device (15) enabling products to be passed from the upper series (4) to the lower series (5) of rollers (6).
   – in the direction of its closed end (9), an appliance for heating to a constant temperature, and
   – in the direction of its open end, an appliance (12) to extract the combustion gases.

2. A kiln according to Claim 1, characterized in that the lowering device (15) consists of two vertical and parallel metallic frames (17) connected together at their lower ends and located on both sides of the tunnel, carrying a horizontal series of rollers (16) parallel and axially displaced relatively to one another, the support frames being associated with means (19) of vertical displacement by jacks, capable of making the rollers pass from a plane corresponding to the upper series (4) of rollers to a plane corersponding to the lower series (5) of rollers, vertical slots (20) being provided in the walls of the tunnel to permit vertical displacement of the rollers, with plates (22) integral with the frames closing off the vertical slots in those areas through which the rollers do not pass.

3. A kiln according to Claims 2, characterized in that the rollers (16) forming part of the lowering device (15) are associated with means enabling them to be driven in rotation in the same direction as the rollers (6) of the upper series (4) of rollers, when they are in the same plane as the rollers of that series, and to be driven in the same direction as the rollers (6) of the lower series (5) of rollers, when they are in the same plane as the rollers of that second series, and to be stationary during the transfer period.

4. A kiln according to Claim 2, characterized in that the lower series (5) of rollers is equipped at the level of the lowering device (15) with rollers driven in the same direction as the rollers of that series, and the rollers of the lowering device are axially displaced relatively to the rollers of the lower series so that in the low position they can fit in between the latter, the rollers of the lowering device being driven in the same direction as the rollers of the upper series of rollers when they are in the same plane as them.

5. A kiln according to any of Claims 1 to 4, characterized in that the rollers (6) of the upper series (4) of rollers above the lowering device (15) are equipped with means of driving at variable speed, between a speed equal to that of the other rollers during the movement cycle of the lowering device, and a greater speed during the loading of products onto the rollers of the lowering device.

FIG.1

FIG.2

EP 0 281 487 B1

FIG.3

FIG.4